# EUROPÄISCHE PATENTANMELDUNG

(11) **EP 3 982 456 A1**
(43) Veröffentlichungstag der Anmeldung: **13.04.2022**
(21) Anmeldenummer: 21201503.6
(22) Anmeldetag: 07.10.2021
(51) Int. Cl.: H01M 10/42, G01R 31/00, H01M 10/48, H01M 50/531

(54) **BATTERIEZELLE ZUR DURCHFÜHRUNG EINES SICHERHEITSTESTES**

(30) Priorität: 07.10.2020 DE 102020126295
(71) Anmelder: Volkswagen Aktiengesellschaft, 38440 Wolfsburg (DE)
(72) Erfinder: Jahnke, Hannes, 38114 Braunschweig (DE); Nolte, Oliver, 38116 Braunschweig (DE); Klink, Marcus, 38228 Salzgitter (DE)
(74) Vertreter: Bals & Vogel Patentanwälte PartGmbB

(57) **Zusammenfassung**

Batteriezelle (2) zur Durchführung eines Sicherheitstestes, umfassend zumindest eine schichtförmig ausgebildete Anode (6), zumindest eine schichtförmig ausgebildete Kathode (8), einer Mehrzahl von Separatorschichten (4) zur elektrischen Isolation der Anode (6) und/oder der Kathode (8), wobei innerhalb der zumindest einen Anode (6) ein Anodenableiterelement (10) und innerhalb der zumindest einen Kathode (8) ein Kathodenableiterelement (12) angeordnet ist, wobei zwischen dem Anodenableiterelement (10) und dem Kathodenableiterelement (12) ein Schaltelement (14) zur Erzeugung eines Kurzschlusses zwischen der Anode (6) und der Kathode (8) angeordnet ist, wobei das Schaltelement (14) unmittelbar mit dem Anodenableiterelement (10) und/oder dem Kathodenableiterelement (12) verbunden ist.

## Beschreibung

Die vorliegende Erfindung betrifft eine Batteriezelle, ein System sowie ein Verfahren zur Durchführung eines Sicherheitstestes.

Mit der steigenden Akzeptanz von Elektromobilität wächst auch der Anspruch an die Sicherheit von Batteriezellen als Energiequelle für die Elektromobilität. Eine Gefahr geht hierbei von Kurzschlüssen innerhalb von Batteriezellen aus, die dazu führen, dass nicht nur die einzelnen Batteriezellen, sondern ganze Batteriemodule Schaden nehmen. Ursache für solche Kurzschlüsse ist zum Beispiel eine bei Ladephasen lokal vorkommende Überladung der Batteriezellen. Dies führt beispielsweise in Lithium-Ionen-Akkus dazu, dass die innerhalb der Zellen vorhandenen Lithium-Ionen sich an der Anode anlagern und so genannte Dendriten wachsen lassen. Die Dendriten können die Separatorschicht zwischen einer Anode und einer angrenzenden Kathode durchbohren und schließlich den Kontakt zwischen Anode und Kathode herstellen, was einen Kurzschluss verursacht. Die beim Kurzschluss entstehende Hitze kann u.a. den brennbaren Elektrolyten entzünden, was sich auf benachbarte Zellen und letztlich das ganze Batteriemodul ausbreiten kann.

Um die Sicherheit von Batteriezellen zu erhöhen, sind aus dem Stand der Technik verschiedene Ansätze bekannt. So schlagen die Dokumente US 2017/0133872 A1 und EP 3 376 584 A1 vor, Batteriezellen bei Erkennen eines Kurzschlusses über einen Schnellentlademechanismus schnell zu entladen, um einer Brandentwicklung oder einer Explosion vorzubeugen.

Diese bekannten Sicherheitsmechanismen schützen allerdings nur, wenn ein Kurzschluss innerhalb einer Batteriezelle schnell genug erkannt wird. Um die mögliche Gefahr von Kurzschlüssen besser einschätzen und vorhersagen zu können, ist bis heute nachteiliger Weise noch zu wenig über die zu Kurzschlüssen führenden Zellprozesse innerhalb von Batteriezellen bekannt. Daher ist es zur Erhöhung der Sicherheit erforderlich, das Kurzschlussverhalten von Batteriezellen genauer zu untersuchen.

Hierzu sind aus dem Stand der Technik verschiedene Methoden bekannt, in denen bewusst Kurzschlüsse innerhalb von Batteriezellen induziert werden, um das Verhalten der Zellen in diesen Situationen zu untersuchen und somit weiterführende Kenntnisse über das Kurzschlussverhalten von Batteriezellen zu erhalten. In solchen Sicherheitstests werden Batteriezellen im Labor beispielsweise über das gewaltsame Eindringen eines elektrisch leitfähigen Nagels, über eine Zelldeformation, über eine Überhitzung, über einen externen Kurzschluss, über das Einbringen von hochenergetischer Laserstrahlung bzw. schmelzfähiger Legierungen und Wachse oder über das Einbringen von Fremdpartikeln zu der Erzeugung von Kurzschlüssen angeregt. Die induzierten Kurzschlüsse werden dabei vorzugsweise in Abhängigkeit einer Vielzahl weiterer veränderlicher Parameter durchgeführt und können auf diese Weise zum besseren Verständnis des Kurzschlussverhaltens von Batteriezellen beitragen. Ein Nachteil der bekannten Methoden ist allerdings, dass bei diesen Lösungen Material in die Zelle eingebracht wird, Aktivmaterial aus den Zellen entfernt wird oder die Zellen geöffnet werden müssen, sodass sich der Zustand der Batteriezellen bei der künstlichen Initiierung eines Kurzschlusses signifikant vom natürlichen Zellzustand der Batteriezellen unterscheidet. Dies reduziert wiederum die Aussagekraft der Sicherheitstests.

Es ist daher die Aufgabe der vorliegenden Erfindung, die voranstehend beschriebenen Nachteile zumindest teilweise zu beheben, insbesondere ist es die Aufgabe der vorliegenden Erfindung, eine Batteriezelle für den Einsatz in einem Sicherheitstest vorzuschlagen, die konstruktiv einfach und kostengünstig herstellbar ist und in Sicherheitstests insbesondere möglichst aussagekräftige Informationen in Bezug auf das natürliche Zellverhalten von Batteriezellen liefert.

Die voranstehende Aufgabe wird gelöst durch eine Batteriezelle mit den Merkmalen des Anspruchs 1, ein System gemäß Anspruch 10 sowie ein Verfahren gemäß Anspruch 11. Weitere Merkmale und Details ergeben sich aus den Unteransprüchen, der Beschreibung und den Zeichnungen. Technische Merkmale, die zu der erfindungsgemäßen Batteriezelle offenbart werden, gelten dabei auch in Verbindung mit dem erfindungsgemäßen System bzw. dem erfindungsgemäßen Verfahren und umgekehrt, sodass bezüglich der Offenbarung zu den einzelnen Erfindungsaspekten stets wechselseitig Bezug genommen wird bzw. werden kann. Zweckmäßige Ausgestaltungen der Erfindung sind in den abhängigen Ansprüchen ausgeführt.

Die erfindungsgemäße Batteriezelle zur Durchführung eines Sicherheitstestes umfasst hierbei zumindest eine schichtförmig ausgebildete Anode, zumindest eine schichtförmig ausgebildete Kathode und eine Mehrzahl von Separatorschichten zur elektrischen Isolation der Anode und/oder der Kathode, wobei innerhalb der zumindest einen Anode ein Anodenableiterelement und innerhalb der zumindest einen Kathode ein Kathodenableiterelement angeordnet ist, wobei zwischen dem Anodenableiterelement und dem Kathodenableiterelement ein Schaltelement zur Erzeugung eines Kurzschlusses zwischen der Anode und der Kathode angeordnet ist. Die erfindungsgemäße Batteriezelle zeichnet sich hierbei dadurch aus, dass das Schaltelement unmittelbar mit dem Anodenableiterelement und/oder dem Kathodenableiterelement verbunden ist.

Im Rahmen der Erfindung ist erkannt worden, dass insbesondere durch eine möglichst naturgetreue Nachahmung der Ausbildung eines Kurzschlusses innerhalb einer Batteriezelle besonders aussagekräftige Informationen über das natürliche Zellverhalten von Batteriezellen in Hinblick auf die Erzeugung eines Kurzschlusses erhalten werden können. Mittels dieser Informationen können dann besonders gezielt effektive Maßnahmen zur Erhöhung der Sicherheit von Batteriezellen und Batteriemodulen ergriffen werden.

Die gegenständliche Batteriezelle zur Durchführung eines Sicherheitstestes ist insbesondere in Form einer Lithium-Ionen-Batteriezelle gebildet, wie sie heute für den Einsatz in Smartphones, Laptops, Elektro- oder Hybridfahrzeugen vorgesehen ist. Ebenso ist es allerdings denkbar, dass die gegenständliche Batteriezelle in Form einer Natrium-Ionen-Zelle, einer Magnesium-Ionen-Zelle oder einer Zink-, einer Aluminium- oder einer anderen Metalloxidbatterie gebildet ist, bei der ein Kurzschluss zwischen der Anode und der Kathode der Zelle durch Dendritenwachstum auftreten kann.

Unter einer schichtförmig ausgebildeten Anode bzw. einer schichtförmig ausgebildeten Kathode kann im Rahmen der Erfindung insbesondere eine flächenhaft ausgebreitete Masse eines Anoden- bzw. Kathodenmaterials verstanden werden, bei der die Schichtdicke geringer ist, als die Schichtbreite. Die gegenständlichen Separatorschichten zur elektrischen Isolation der Anode und/oder der Kathode können vorzugsweise aus mikropoporösen Polymeren, insbesondere aus mikroporösen Polymermembranen gebildet und beispielsweise mehrlagig ausgeführt sein. Ebenso können die Separatorschichten aus feinen, vorzugsweise keramisch beschichteten Vliesstoffen gebildet sein, die nicht nur eine hohe Flexibilität, sondern auch eine hohe Temperaturbeständigkeit bieten und somit eine größere Sicherheit vor thermisch bedingtem Durchgehen einer Zelle aufweisen. Unter einer unmittelbaren Verbindung des Schaltelementes mit dem Anodenableiterelement und/oder dem Kathodenableiterelement wird im Rahmen der Erfindung insbesondere eine direkte Verbindung des Schaltelementes mit dem Anodenableiterelement und/oder dem Kathodenableiterelement verstanden, bei der ein Teil des Schalterelementes einen direkten elektrischen und mechanischen Kontakt zu dem Anodenableiterelement und/oder dem Kathodenableiterelement aufweist und beispielsweise nicht über Kontaktfahnen oder zentrale Kontaktelemente, wie die Zellterminals, mit dem Anodenableiterelement und/oder dem Kathodenableiterelement verbunden ist. Es versteht sich, dass das Schaltelement nicht nur aus dem bloßen Schalter bestehen kann, sondern auch einen vorzugsweise kurzen Leitungsteil zur Verbindung mit dem Anodenableiterelement bzw. dem Kathodenableiterelement aufweisen kann, sodass eine Verbindung des Schaltelements mit dem Anodenableiterelement und/oder dem Kathodenableiterelement über den betreffenden Leitungsteil des Schaltelements auch als erfindungsgemäße unmittelbare Verbindung zwischen dem Schaltelement und dem Anodenableiterelement bzw. dem Kathodenableiterelement verstanden werden kann.

Im Hinblick auf eine effiziente Ableitung und Aufnahme von Elektronen kann erfindungsgemäß insbesondere vorgesehen sein, dass das Anodenableiterelement und/oder das Kathodenableiterelement aus einer Metallplatte gebildet ist, wobei die Metallplatte vorzugsweise im Wesentlichen planparallel zu den an der Anode und/oder der Kathode angrenzenden Separatorschichten angeordnet ist, wobei die Metallplatte insbesondere derart zentral innerhalb der Anode und/oder der Kathode angeordnet ist, dass die durch das Anodenableiterelement und/oder das Kathodenableiterelement getrennten Querschnittsflächen der Anode und/oder der Kathode im Wesentlichen dieselbe Fläche aufweisen. Vorzugsweise ragt das Anodenableiterelement hierbei gleich weit oder weiter aus der Schichtstruktur hervor, wie bzw. als das Kathodenableiterelement. Bei einer Mehrschichtstruktur können die einzelnen Halbleiterelemente dann zu Verschaltungszwecken für die Herstellung von Batteriemodulen vorzugsweise über Ableiterfahnen miteinander elektrisch verbunden sein. Für einen flexibleren Spannungsabgriff können die mit den Anodenableiterelementen und/oder Kathodenableiterelementen verbundenen Ableiterfahnen auch selbst noch mit Kontaktelementen versehen sein. Eine gegenständliche Metallplatte kann hierbei insbesondere in Form einer Ableiter- oder Metallfolie ausgebildet sein. Ebenso sind poröse Ableiter, wie beispielsweise Gitterstrukturen oder dergleichen vorstellbar.

Im Hinblick auf eine effiziente Ableitung und Aufnahme von Elektronen kann im Rahmen einer kostengünstigen Lösung - insbesondere bei einer Ausbildung der Batteriezelle als Lithium-Ionenzellen - erfindungsgemäß ebenso vorgesehen sein, dass das Anodenableiterelement aus einem Kupferwerkstoff und/oder das Kathodenableiterelement aus einem Aluminiumwerkstoff gebildet ist. Der Kupferwerkstoff kann hierbei vorzugsweise aus elementarem Kupfer gebildet sein, wohingegen der Aluminiumwerkstoff vorzugsweise aus elementarem Aluminium gebildet sein kann. Ebenso könnte das Anodenableiterelement und das Kathodenableiterelement bei einer Ausbildung der Batteriezelle als Lithium-Ionen-Zelle auch aus Nickel gebildet sein, was jedoch etwas kostenaufwändiger wäre. Der Einsatz von Kupferfolie für die Kathode bzw. der Einsatz von Aluminium für die Anode hat sich jeweils als nachteilig herausgestellt, da Kupfer an der Anode korrodiert und Aluminium mit Lithium reagiert.

Im Rahmen einer konstruktiv möglichst einfachen Kontaktierung des Anodenableiterelementes und/oder des Kathodenableiterelementes mit dem gegenständlichen Schaltelement kann erfindungsgemäß vorteilhafterweise ferner vorgesehen sein, dass das Schaltelement über eine Ableiterfahne zur Kontaktierung eines Anodenableiterelementes und eines Kathodenableiterelementes mit dem Anodenableiterelement oder dem Kathodenableiterelement verbunden ist. Um hierbei gleichzeitig die erfindungsgemäß vorgesehene naturgetreue Nachahmung der Ausbildung eines Kurzschlusses innerhalb einer Batteriezelle zu gewährleisten, ist das Schaltelement - wie erfindungsgemäß vorgesehen - über eine bzw. die andere Verbindungsstelle unmittelbar mit dem Anodenableiterelement oder Kathodenableiterelement verbunden. Ebenso ist es auch vorstellbar, dass eine Verbindung zumindest einseitig über ein Kontaktelement hergestellt wird, das zur Kontaktierung einer Mehrzahl von Kontaktfahnen vorgesehen ist.

Um schnell und zuverlässig einen Kurzschluss zwischen der Anode und der Kathode herbeiführen zu können, kann erfindungsgemäß insbesondere vorgesehen sein, dass das Schaltelement in Form eines Halbleiterschalters und/oder eines mechanischen Schalters gebildet ist. Im Rahmen einer Ausbildung des Schaltelementes als Halbleiterschalter kann das Schaltelement vorzugsweise als Feldeffekttransistor (FET), als Bipolartransistor, als Diode, als Thyristor oder als Relais oder dergleichen ausgebildet sein. Im Rahmen einer Ausbildung des Schalterelementes als mechanischer Schalter kann der Schalter hingegen vorzugsweise als Kippschalter, Wippschalter, Druckschalter, Rastschalter, Schiebeschalter, Drehschalter, Stufenschalter, Tastschalter oder dergleichen ausgebildet sein.

Im Rahmen einer konstruktiv einfach implementierbaren Steuerung des Schaltelementes aus der Ferne, ist es insbesondere denkbar, dass das Schaltelement elektrisch und/oder magnetisch und/oder pyrotechnisch und/oder pneumatisch und/oder per Funk geregelt ist. Hierbei kann der Schalter insbesondere über eine interne Energiequelle verfügen, um entsprechend selbstständig auslösen zu können.

Zur besseren Steuerung der Temperatur beim Kurzschluss kann erfindungsgemäß insbesondere ein Heizelement zur Steuerung einer Temperatur vorgesehen sein, wobei das Schaltelement vorzugsweise über das Heizelement mit dem Anodenableiterelement und/oder dem Kathodenableiterelement verbunden ist. Auf diese Weise kann beispielsweise eine naturgetreue Nachahmung der Ausbildung eines Kurzschlusses im Hinblick auf die Zelltemperatur innerhalb der Batteriezelle noch optimiert werden.

Um die erfindungsgemäß vorgesehene Nachahmung der Ausbildung eines Kurzschlusses innerhalb einer Batteriezelle besonders naturgetreu nachzubilden, kann erfindungsgemäß insbesondere vorgesehen sein, dass das Schaltelement zwischen einem Anodenableiterelement und einem Kathodenableiterelement angeordnet ist (verschaltet ist), die benachbart zueinander angeordnet sind, wobei das Anodenableiterelement und das Kathodenableiterelement vorzugsweise lediglich durch einen Teil der schichtförmigen Anode, eine Separatorschicht und einen Teil der schichtförmigen Kathode voneinander getrennt sind. Unter einer solchen benachbarten Anordnung zueinander kann insbesondere verstanden werden, dass die von dem Schaltelement über das Anodenableiterelement elektrisch kontaktierte Anodenschicht beinahe unmittelbar angrenzend an die von dem Schaltelement über das Kathodenableiterelement elektrisch kontaktierte Kathodenschicht angeordnet ist und die betreffende Anoden- und Kathodenschicht nur durch eine Separatorschicht voneinander getrennt sind. Die Verbindung zwischen dem Schaltelement und dem Anodenableiter- und/oder Kathodenableiterelement kann hierbei zumindest teilweise auch über elektrisch leitende Ableiterfahnen hergestellt sein. Bei einem natürlich bedingten Kurzschluss innerhalb einer Batteriezelle, infolge von Dendritenbildung durch das Ablagern von Lithium-Ionen an der Anodenoberfläche, erfolgt ein Kurzschluss zwischen zwei benachbart zueinander angeordneten Elektroden (Anode und Kathode) und zwar genau dann, wenn der sich bildende Dendrit die zwischen den beiden benachbarten Elektroden (Anode und Kathode) angeordnete Separatorschicht durchtrennt und einen elektrischen Kontakt zwischen der Anode und Kathode herstellt. Daher ist ein induzierter Kurzschluss besonders naturgetreu und aussagekräftig, wenn er zwischen einer benachbarten Anode und Kathode erfolgt.

Im Rahmen eines möglichst naturgetreuen Testes für eine leichte, kompakt anordbare und temperaturstabile Batteriezelle kann gegenständlich ferner vorgesehen sein, dass die Batteriezelle in Form einer Pouch-Zelle gebildet ist. Pouch-Zellen können insbesondere durch die fehlenden Außengehäuse mit geringer Dicke, geringem Gewicht und anwendungsspezifischen Größen hergestellt werden. Zudem haben sie durch ihre ebene Außenform gute Möglichkeiten zur Wärmeableitung.

Ebenfalls Gegenstand der Erfindung ist ein System zur Durchführung eines Sicherheitstestes über die Erzeugung eines Kurzschlusses zwischen einer Anode und einer Kathode einer Batteriezelle. Hierbei umfasst das erfindungsgemäße System eine voranstehend beschriebene Batteriezelle sowie ein Schaltgerät zum Aussenden eines Schaltsignals zur Ausführung eines Schaltvorgangs des Schaltelementes von einem geöffneten in einen geschlossenen Zustand, um eine direkte elektrische Verbindung zwischen dem Anodenableiterelement und dem Kathodenableiterelement herzustellen, sodass ein Kurzschluss zwischen der Anode und der Kathode erzeugbar ist. Damit weist das erfindungsgemäße System die gleichen Vorteile auf, wie sie bereits ausführlich in Bezug auf die erfindungsgemäße Batteriezelle beschrieben worden sind.

Ebenfalls Gegenstand der Erfindung ist ein Verfahren zur Durchführung eines Sicherheitstestes, insbesondere unter Verwendung einer voranstehend beschriebenen Batteriezelle. Hierbei umfasst das erfindungsgemäße Verfahren die Schritte eines Aussendens eines Schaltsignals zur Ausführung eines Schaltvorgangs eines Schaltelementes von einem geöffneten in einen geschlossenen Zustand, wobei das Schaltelement zwischen einem mit einer Anode elektrisch verbundenen Anodenableiterelement und einem mit einer Kathode elektrisch verbundenen Kathodenableiterelement angeordnet und unmittelbar mit dem Anodenableiterelement und/oder dem Kathodenableiterelement verbunden ist, eines Empfangens des Schaltsignals durch das Schaltelement sowie eines Schaltens des Schaltelementes von einem geöffneten in einen geschlossenen Zustand, wobei in dem geschlossenen Zustand eine direkte elektrische Verbindung zwischen dem Anodenableiterelement und dem Kathodenableiterelement hergestellt wird, sodass durch die hergestellte Verbindung zwischen dem Anodenableiterelement und dem Kathodenableiterelement ein Kurzschluss zwischen der Anode und der Kathode erzeugt wird. Damit weist das erfindungsgemäße Verfahren die gleichen Vorteile auf, wie sie bereits ausführlich in Bezug auf die erfindungsgemäße Batteriezelle bzw. das erfindungsgemäße System beschrieben worden sind.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein.

Es zeigen:
- Fig. 1: eine schematische Darstellung einer erfindungsgemäßen Batteriezelle in einer Draufsicht (oben) und einer vergrößerten Darstellung einer Schnittansicht (unten) eines Teils der Batteriezelle gemäß einem ersten Ausführungsbeispiel,
- Fig. 2a: eine schematische Darstellung des inneren Bereichs einer erfindungsgemäßen Batteriezelle in einer räumlichen Darstellung gemäß einem ersten Ausführungsbeispiel,
- Fig. 2b: eine schematische Darstellung einer Schnittansicht eines Teilbereichs der Batteriezelle aus Fig. 2a,
- Fig. 3a: eine schematische Darstellung des inneren Bereichs einer erfindungsgemäßen Batteriezelle in einer räumlichen Darstellung gemäß einem zweiten Ausführungsbeispiel,
- Fig. 3b: eine schematische Darstellung einer Schnittansicht eines Teilbereichs der Batteriezelle aus Fig. 3a,
- Fig. 4: eine schematische Darstellung der einzelnen Schritte eines erfindungsgemäßen Verfahrens zur Durchführung eines Sicherheitstestes.

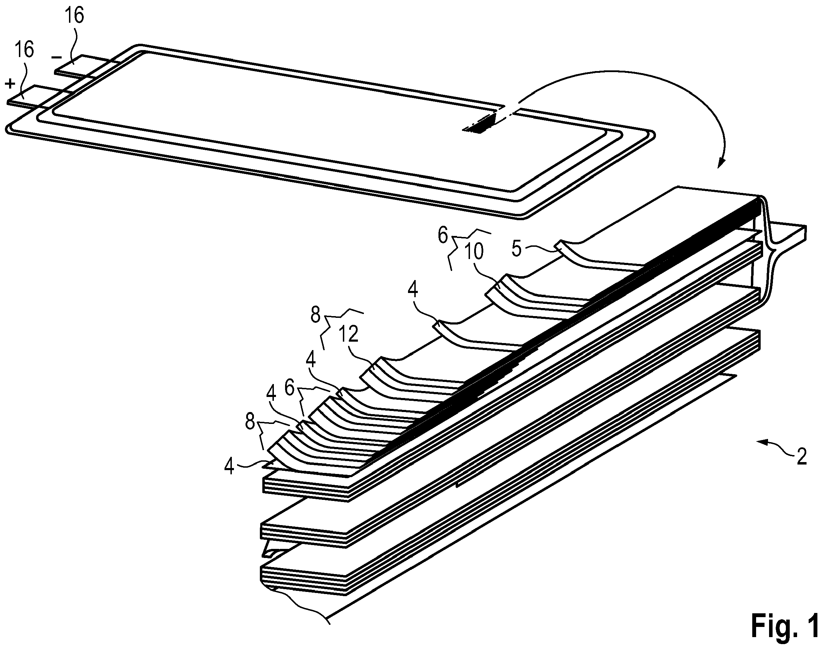

Fig. 1 zeigt eine schematische Darstellung einer erfindungsgemäßen Batteriezelle 2 in einer Draufsicht (oben) und einer vergrößerten Darstellung einer Schnittansicht (unten) eines Teils der Batteriezelle 2 gemäß einem ersten Ausführungsbeispiel.

Die in Fig. 1 dargestellte und in Form einer Pouch-Zelle gebildete Batteriezelle 2 gemäß einem ersten Ausführungsbeispiel kann bspw. als Lithium-Ionen-Zelle ausgebildet sein und weist - wie vorliegend zu erkennen - eine Mehrzahl von schichtförmig ausgebildeten Anoden 6, eine Mehrzahl von schichtförmig ausgebildeten Kathoden 8 sowie eine Mehrzahl von Separatorschichten 4 zur elektrischen Isolation der Anode 6 und/oder der Kathode 8 auf. Innerhalb der Anoden 6 ist jeweils ein Anodenableiterelement 10 angeordnet, wohingegen innerhalb der Kathoden 8 ein Kathodenableiterelement 12 angeordnet ist. Außen um die alternierend aufgebaute Mehrschichtstruktur ist ferner ein Zellgehäuse 5 angeordnet, das beispielsweise aus Aluminium gebildet sein kann und dementsprechend nach innen zusätzlich elektrisch isoliert ausgebildet sein kann. Zum Abgreifen der Elektrodenpotentiale der Kathode 8 und der Anode 6 der Batteriezelle 2 sind ferner zwei Ableiterfahnen 16 aus der Batteriezelle 2 herausgeführt, die jeweils mit den Anodenschichten 6 bzw. den Kathodenschichten 8 elektrisch verbunden sind. Anhand der vorliegenden Schnittdarstellung nicht zu erkennen, ist, dass zwischen dem Anodenableiterelement 10 und dem Kathodenableiterelement 12 ein Schaltelement 14 zur Erzeugung eines Kurzschlusses zwischen der Anode 6 und der Kathode 8 angeordnet ist, wobei das Schaltelement 14 unmittelbar mit dem Anodenableiterelement 10 und/oder dem Kathodenableiterelement 12 verbunden ist.

Das Anodenableiterelement 10 sowie das Kathodenableiterelement 12 sind gemäß dem vorliegenden Ausführungsbeispiel in Form von Metallplatten gebildet, die im Wesentlichen planparallel zu den an der Anode 6 und der Kathode 8 angrenzenden Separatorschichten 4 angeordnet sind und hierbei insbesondere derart zentral innerhalb der Anode 6 und der Kathode 8 positioniert sind, dass die durch das Anodenableiterelement 10 und das Kathodenableiterelement 12 getrennten Querschnittsflächen der Anoden 6 und der Kathoden 8 im Wesentlichen dieselbe Fläche aufweisen.

Im Hinblick auf eine effiziente Ableitung und Aufnahme von Elektronen sowie eine vorzugsweise kostengünstige Ausführung ist das Anodenableiterelement 10 vorliegend aus einem Kupferwerkstoff und das Kathodenableiterelement 12 aus einem Aluminiumwerkstoff gebildet.

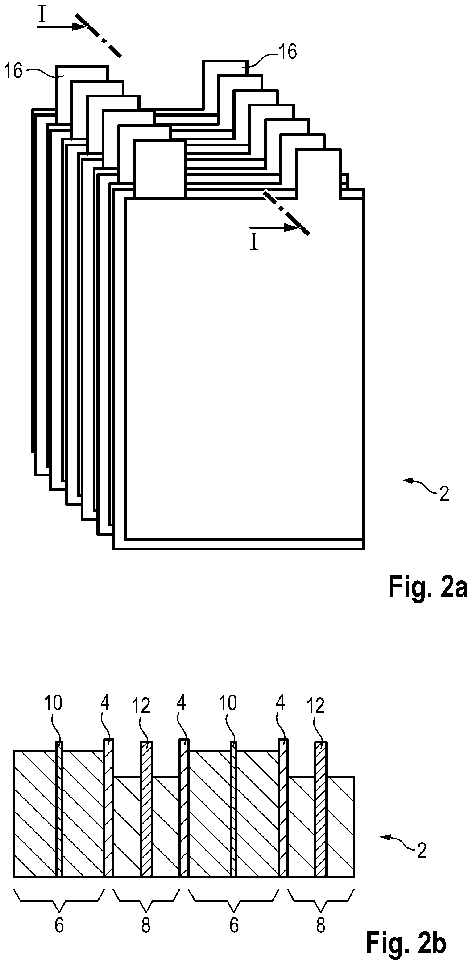

Fig. 2a zeigt eine schematische Darstellung des inneren Bereichs einer erfindungsgemäßen Batteriezelle 2 in einer räumlichen Darstellung gemäß einem ersten Ausführungsbeispiel.

Gemäß dieser Darstellung ist die Anordnung der aufeinander gestapelten plattenförmigen Elemente aus Anode 6, Separatorschicht 4 und Kathode 8 zu erkennen, deren Potenziale über die Ableiterfähnchen 16 abgreifbar sind.

Figur 2b zeigt eine schematische Darstellung einer Schnittansicht gemäß der Schnittlinie I-I eines Teilbereichs der erfindungsgemäßen Batteriezelle aus Figur 2a.

Gemäß dieser Darstellung ist gut die alternierende Anordnung aus Anode 6, Separatorschicht 4, Kathode 8 und Separatorschicht 4 zu erkennen. Zudem sind die innerhalb der Kathode 8 und der Anode 6 angeordneten Ableiterelemente 10, 12 erkennbar.

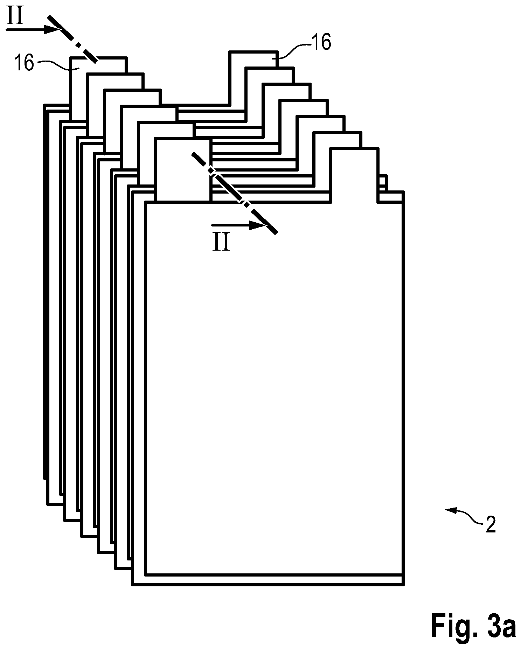

Fig. 3a zeigt wiederum eine schematische Darstellung des inneren Bereichs einer erfindungsgemäßen Batteriezelle 2 in einer räumlichen Darstellung gemäß einem zweiten Ausführungsbeispiel.

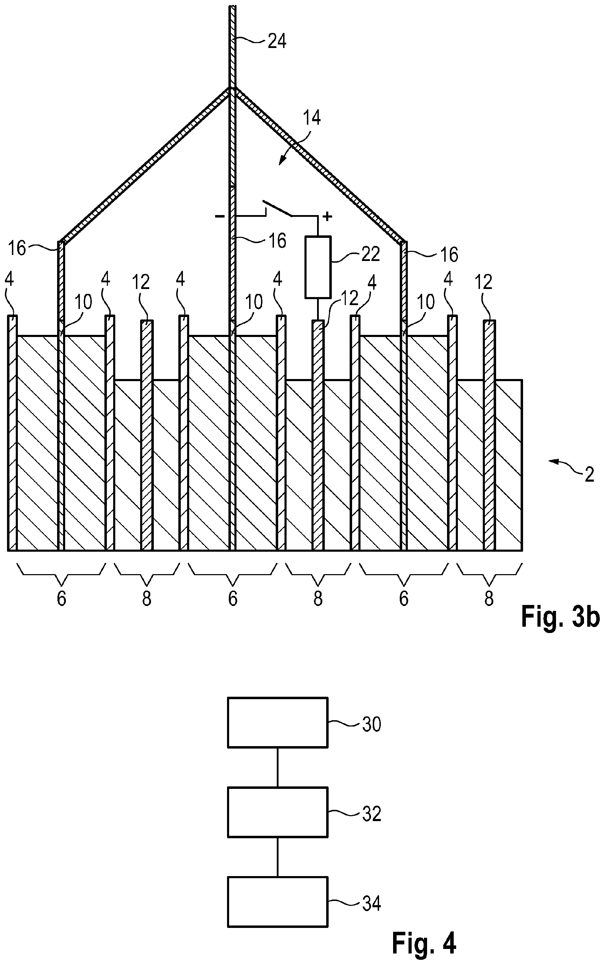

Figur 3b zeigt eine schematische Darstellung einer Schnittansicht gemäß der Schnittlinie II-II eines Teilbereichs der erfindungsgemäßen Batteriezelle aus Figur 3a.

Gemäß dieser Darstellung ist auch das zwischen dem Anodenableiterelement 10 und dem Kathodenableiterelement 12 angeordnete Schaltelement 14 zur Erzeugung eines Kurzschlusses zwischen der Anode 6 und der Kathode 8 zu erkennen, das vorliegend unmittelbar mit dem Kathodenableiterelement 12 verbunden ist.

Mit dem Anodenableiterelement 10 ist das Schaltelement 14 vorliegend über die Halbleiterfahne 16 verbunden. Ebenso ist natürlich möglich, dass das Schaltelement 14 sowohl unmittelbar mit dem Kathodenableiterelement 12, als auch unmittelbar mit dem Anodenableiterelement 10 verbunden ist.

Ebenso könnte das Schaltelement 14 neben einer unmittelbaren Verbindung zu dem Kathodenableiterelement 12 beispielsweise über das Kontaktelement 24, das eine Verbindung zu den Ableiterfähnchen 16 der Anodenableiterelemente 10 aufweist, mit Anodenableiterelementen 10 der Anoden 6 elektrisch verbunden sein.

Das Schaltelement 14, was sich vorliegend in geöffneter Stellung befindet, kann beispielsweise in Form eines Halbleiterschalters oder auch eines mechanischen Schalters gebildet sein. Hierbei kann das Schaltelement 14 elektrisch, magnetisch, pyrotechnisch, pneumatisch oder auch per Funk geregelt werden.

Zur besseren Steuerung der Temperatur bei einem zu initiierenden Kurzschluss ist gemäß der Darstellung der Batteriezelle 2 gemäß Fig. 3b ferner ein Heizelement 22 zur Steuerung einer Temperatur innerhalb des Schaltelementes 14 vorgesehen.

Wie gemäß dem in Figur 3b dargestellten Ausführungsbeispiel zu entnehmen ist, ist das Schaltelement 14 zwischen einem Anodenableiterelement 10 und einem Kathodenableiterelement 12 angeordnet, die benachbart zueinander angeordnet sind, wobei das Anodenableiterelement 10 und das Kathodenableiterelement 12 hierbei lediglich durch einen Teil der schichtförmigen Anode 6, eine Separatorschicht 4 und einen Teil der schichtfömigen Kathode 8 voneinander getrennt sind.

Fig. 4 zeigt eine schematische Darstellung der einzelnen Schritte eines erfindungsgemäßen Verfahrens zur Durchführung eines Sicherheitstestes, insbesondere unter Verwendung einer erfindungsgemäßen Batteriezelle 2. Hierbei umfasst das erfindungsgemäße Verfahren die Schritte eines Aussendens 30 eines Schaltsignals zur Ausführung eines Schaltvorgangs eines Schaltelementes 14 von einem geöffneten in einen geschlossenen Zustand, wobei das Schaltelement 14 zwischen einem mit einer Anode 6 elektrisch verbundenen Anodenableiterelement 10 und einem mit einer Kathode 8 elektrisch verbundenen Kathodenableiterelement 12 angeordnet und unmittelbar mit dem Anodenableiterelement 10 und/oder dem Kathodenableiterelement 12 verbunden ist, eines Empfangens 32 des Schaltsignals durch das Schaltelement 14 sowie eines Schaltens 34 des Schaltelementes 14 von einem geöffneten in einen geschlossenen Zustand, wobei in dem geschlossenen Zustand eine direkte elektrische Verbindung zwischen dem Anodenableiterelement 10 und dem Kathodenableiterelement 12 hergestellt wird, wobei durch die hergestellte Verbindung zwischen dem Anodenableiterelement 10 und dem Kathodenableiterelement 12 ein Kurzschluss zwischen der Anode 6 und der Kathode 8 erzeugt wird.

Mittels der erfindungsgemäßen Batteriezelle 2, des erfindungsgemäßen Systems 1 sowie dem erfindungsgemäßen Verfahren zur Durchführung eines Sicherheitstestes ist es insbesondere möglich, durch die erfindungsgemäße unmittelbare Verbindung eines Schaltelementes 14 mit einem Anodenableiterelement 10 und/oder einem Kathodenableiterelement 12 zielgerichtet einen Kurzschluss zwischen der Anode 6 und der Kathode 8 innerhalb einer Batteriezelle 2 zu erzeugen, der aufgrund seiner besonders naturgetreuen Nachahmung eines natürlichen Kurzschlussverhaltens von Batteriezellen besonders aussagekräftige Informationen über das Realkurzschlussverhalten von Batteriezellen liefert. Mittels der auf diese Weise erhaltenen Informationen ist es insbesondere möglich, auf effektive und zielgerichtete Weise Sicherheitsmaßnahmen für den Einsatz von Batteriezellen einzuführen.

### Bezugszeichenliste

- 1: System zur Durchführung eines Sicherheitstestes
- 2: Batteriezelle zur Durchführung eines Sicherheitstestes
- 4: Separatorschicht
- 5: Zellgehäuse
- 6: Anode
- 8: Kathode
- 10: Anodenableiterelement
- 12: Kathodenableiterelement
- 14: Schaltelement
- 16: Ableiterfahne
- 20: Schaltgerät
- 22: Heizelement
- 24: Kontaktelement
- 30: Aussenden eines Schaltsignals
- 32: Empfangen des Schaltsignals
- 34: Schalten des Schaltelementes

## Patentansprüche

1. Batteriezelle (2) zur Durchführung eines Sicherheitstestes, umfassend:
- zumindest eine schichtförmig ausgebildete Anode (6),
- zumindest eine schichtförmig ausgebildete Kathode (8),
- einer Mehrzahl von Separatorschichten (4) zur elektrischen Isolation der Anode (6) und/oder der Kathode (8),
- wobei innerhalb der zumindest einen Anode (6) ein Anodenableiterelement (10) und innerhalb der zumindest einen Kathode (8) ein Kathodenableiterelement (12) angeordnet ist,
- wobei zwischen dem Anodenableiterelement (10) und dem Kathodenableiterelement (12) ein Schaltelement (14) zur Erzeugung eines Kurzschlusses zwischen der Anode (6) und der Kathode (8) angeordnet ist,
**dadurch gekennzeichnet,**
**dass** das Schaltelement (14) unmittelbar mit dem Anodenableiterelement (10) und/oder dem Kathodenableiterelement (12) verbunden ist.

2. Batteriezelle (2) nach Anspruch 1,
**dadurch gekennzeichnet,**
**dass** das Anodenableiterelement (10) und/oder das Kathodenableiterelement (12) aus einer Metallplatte gebildet ist, wobei die Metallplatte vorzugsweise im Wesentlichen planparallel zu den an der Anode (6) und/oder der Kathode (8) angrenzenden Separatorschichten (4) angeordnet ist, wobei die Metallplatte insbesondere derart zentral innerhalb der Anode (6) und/oder der Kathode (8) angeordnet ist, dass die durch das Anodenableiterelement (10) und/oder das Kathodenableiterelement (12) getrennten Querschnittsflächen der Anode (6) und/oder der Kathode (8) im Wesentlichen dieselbe Fläche aufweisen.

3. Batteriezelle (2) nach Anspruch 1 oder 2,
**dadurch gekennzeichnet,**
**dass** das Anodenableiterelement (10) aus einem Kupferwerkstoff und/oder das Kathodenableiterelement (12) aus einem Aluminiumwerkstoff gebildet ist.

4. Batteriezelle (2) nach einem der vorangehenden Ansprüche,
**dadurch gekennzeichnet,**
**dass** das Schaltelement (14) über eine Ableiterfahne (16) zur Kontaktierung eines Anodenableiterelementes (10) und eines Kathodenableiterelementes (12) mit dem Anodenableiterelement (10) oder dem Kathodenableiterelement (12) verbunden ist.

5. Batteriezelle (2) nach einem der vorangehenden Ansprüche,
**dadurch gekennzeichnet,**
**dass** das Schaltelement (14) in Form eines Halbleiterschalters und/oder eines mechanischen Schalters gebildet ist.

6. Batteriezelle (2) nach einem der vorangehenden Ansprüche,
**dadurch gekennzeichnet,**
**dass** das Schaltelement (14) elektrisch und/oder magnetisch und/oder pyrotechnisch und/oder pneumatisch und/oder per Funk geregelt ist.

7. Batteriezelle (2) nach einem der vorangehenden Ansprüche,
**dadurch gekennzeichnet,**
**dass** das Schaltelement (14) ein Heizelement (22) zur Steuerung einer Temperatur aufweist, wobei das Schaltelement (14) vorzugsweise über das Heizelement (22) mit dem Anodenableiterelement (10) und/oder Kathodenableiterelement (12) verbunden ist.

8. Batteriezelle (2) nach einem der vorangehenden Ansprüche,
**dadurch gekennzeichnet,**
**dass** das Schaltelement (14) zwischen einem Anodenableiterelement (10) und einem Kathodenableiterelement (12) angeordnet ist, die benachbart zueinander angeordnet sind, wobei das Anodenableiterelement (10) und das Kathodenableiterelement (12) vorzugsweise lediglich durch einen Teil der schichtförmigen Anode (6), eine Separatorschicht (4) und einen Teil der schichtförmigen Kathode (8) voneinander getrennt sind.

9. Batteriezelle (2) nach einem der vorangehenden Ansprüche,
**dadurch gekennzeichnet,**
**dass** die Batteriezelle (2) in Form einer Pouch-Zelle gebildet ist.

10. System (1) zur Durchführung eines Sicherheitstestes über die Erzeugung eines Kurzschlusses zwischen einer Anode (6) und einer Kathode (8) einer Batteriezelle (2), umfassend:
- eine Batteriezelle (2) nach einem der vorangehenden Ansprüche,
- ein Schaltgerät (20) zum Aussenden (30) eines Schaltsignals zur Ausführung eines Schaltvorgangs des Schaltelements (14) von einem geöffneten in einen geschlossenen Zustand, um eine direkte elektrische Verbindung zwischen dem Anodenableiterelement (10) und dem Kathodenableiterelement (12) herzustellen, sodass ein Kurzschluss zwischen der Anode (6) und der Kathode (8) erzeugbar ist.

11. Verfahren zur Durchführung eines Sicherheitstestes, insbesondere unter Verwendung einer Batteriezelle (2) nach einem der vorangehenden Ansprüche, umfassend die Schritte:
- Aussenden (30) eines Schaltsignals zur Ausführung eines Schaltvorgangs eines Schaltelements (14) von einem geöffneten in einen geschlossenen Zustand, wobei das Schaltelement (14) zwischen einem mit einer Anode (6) elektrisch verbundenen Anodenableiterelement (10) und einem mit einer Kathode (8) elektrisch verbundenen Kathodenableiterelement (12) angeordnet und unmittelbar mit dem Anodenableiterelement (10) und/oder dem Kathodenableiterelement (12) verbunden ist,
- Empfangen (32) des Schaltsignals durch das Schaltelement (14),
- Schalten (34) des Schaltelementes (14) von einem geöffneten in einen geschlossenen Zustand, wobei in dem geschlossenen Zustand eine direkte elektrische Verbindung zwischen dem Anodenableiterelement (10) und dem Kathodenableiterelement (12) hergestellt wird,
**dadurch gekennzeichnet,**
**dass** durch die hergestellte Verbindung zwischen dem Anodenableiterelement (10) und dem Kathodenableiterelement (12) ein Kurzschluss zwischen der Anode (6) und der Kathode (8) erzeugt wird.
